# EUROPEAN PATENT APPLICATION

(11) **EP 4 197 731 A1**
(43) Date of publication of application: **21.06.2023**
(21) Application number: 22212935.5
(22) Date of filing: 12.12.2022
(51) Int. Cl.: B29B 9/16, B29B 13/06, B01D 53/26, B01D 53/30, B01D 53/72, F26B 17/12, B29B 7/72, B29B 7/82

(54) **ODOUR REDUCTION APPARATUS AND METHOD**

(30) Priority: 17.12.2021 IT 202100031625
(71) Applicant: Piovan S.P.A., 30036 Santa Maria di Sala (VE) (IT)
(72) Inventor: BELLIO, Enrico, 31050 Ponzano V.to (TV) (IT); CAPPELLINI, Davide, 26029 Soncino (CR) (IT)
(74) Representative: Luppi Intellectual Property S.r.l.

(57) **Abstract**

Deodorization apparatus (100) to eliminate, reduce or correct the odour of incoherent plastics, said apparatus comprising at least one container (3) with at least one material inlet (3a) for the entry of incoherent plastics, at least one material outlet (3b) for the exit of the incoherent plastics, at least one gas inlet (2a) for the entry of a process gas, at least one gas outlet (2b) for the exit of the process gas, flow generation means (1, 2) configured to generate a process gas flow which enters said gas inlet (2a) and exits from said gas outlet (2b), wherein outlet olfactory sensor means (E) are arranged to detect odour emissions in the process gas exiting said container (3), and control means (5) are configured to control said flow generation means (1, 2) and to receive signals provided by said outlet olfactory sensor means (E), said control means (5) being configured to control a parameter indicative of the humidity content of the process gas flow entering said container (3) based on said signals. A deodorization method is also disclosed.

## Description

### Background of the invention

The invention relates to a deodorization method and/or apparatus, in particular for the deodorization of incoherent plastics, i.e. in the form of granules and/or microgranules and/or powder and/or flakes or the like. In this description, deodorization means a process that is suitable for eliminating, reducing or correcting an odour, i.e. an odour emission, of a substance.

Specifically, but not exclusively, the invention can be applied advantageously in the field of a plant for treating incoherent plastics, such as, for example, a dehumidifying and/or drying and/or crystallization and/or packaging and/or vacuum and/or pressure conveying plant for the incoherent plastics. This plant can be intended, in particular, to supply a user machine, such as, for example, a machine for processing and transforming plastics, in particular an extruder that supplies extruded plastics to an injection and/or blow and/or compression moulding apparatus.

In the field of transforming plastics into a finished product, in certain cases limiting, eliminating or correcting the odour of the finished product is required. Think, for example, of the specific case of parts for car interiors. In fact, not all purchasers appreciate the odour of a new car, which usually emanates from the resin with which car interior parts are made and which is not easy to eliminate.

Further, today there is increasing request for the possibility and/or availability of recovering plastics used in manufacturing sectors other than those in use. For this purpose, in the plastics processing field, making finished products from polymer granules obtained from recycling is known, the granules being mixed in a variable percentage with virgin resin. The granules to be recycled, even if they are previously selected and processed, generally emit an acrid and disagreeable odour in the subsequent transformation processes, in particular when the granules are dissolved. This odour is not usually detectable at ambient temperature, or in given ambient temperatures, as the odour emissions are not always released.

It is also known that certain products made of plastics release odour emissions into the air over time. The odour emissions can in some cases also contain oily particles that disperse in the environment or adhere to the adjacent surfaces, thus transmitting the odour. An odour can be detected when a gaseous molecule is dissolved in the olfactory mucous and is able to bind with a receptor. The substances that are able to produce an odour sensation must accordingly be able to emit vapours. For this reason, the volatility of the compounds, which is quantifiable in terms of vapour tension, is a fundamental parameter in estimating the capacity of a substance to cause an odour. One parameter that is indicative of the ability to spread the odour of a single substance is the so-called Odour Index (O.I.), defined as the (adimensional) ratio between the vapour tension of the odour substance (expressed in ppm, assuming that the atmosphere corresponds to 10⁶ ppm), and the minimum concentration (expressed in ppm) perceptible by 100% of the panels selected for analysis: O.I. = pᵥₐₚ / OT100. In general, it is possible to consider a compound with an O.I. lower than 10⁵ as being potentially hardly odorous like for example some ketones, whereas sulphur compounds like mercaptans (e.g. isopropyl mercaptan), can reach an O.I. of 10⁹.

Odour monitoring devices are known, for example olfactory sensors, also called electronic noses or IOMS (Instrumental Odour Monitoring Systems), for measuring odour emissions. Olfactory sensors are known comprising metal oxide semiconductors, called MOS. An olfactory sensor of known type may comprise, for example, a set of sensors for detecting the presence of predefined molecules, for example volatile organic compounds (VOC), hydrocarbons, alcohols, etc. It is known that the variation of conductivity of an oxide in presence of volatile organic compounds (VOC) with respect to conductivity in a reference condition is due to an irreversible reaction between the odour and the type of oxygen adsorbed on the surface of the semiconductor. This reaction consumes oxygen and frees the electrons that were bonded with the oxygen ions, lowering the resistance of sensor. The resistance increases if the sensor is exposed to an oxidant gas, like nitrogen dioxide, as the gas is adsorbed in the form of negative ions on the surface of the semiconductor.

Patent publications CN 206870187 U and CN 209534221 U show two known examples of deodorization apparatuses. WO 2021/176370 A1 shows an apparatus as in the preamble of claim 1. One drawback is that prior-art deodorization apparatuses and methods are not sufficiently performing in terms of the reduction of odour emissions from the plastics of a finished product. One limit of the prior art is that known apparatuses for deodorizing incoherent plastics are not controllable with precision and repeatability.

### Summary of the invention

One object of the invention is to obviate one or more of the aforesaid limits and drawbacks of the prior art.

One object is to provide an apparatus and/or a method that are alternatives to the prior art for the deodorization of plastics.

One object is to make an apparatus and/or a method that is able to process a product made of plastics so as to eliminate or significantly reduce emanations of undesired odours from the product.

One object is to deodorize a polymer resin in incoherent format, i.e. in granules and/or microgranules and/or powder and/or flakes or the like.

One advantage is to eliminate or reduce the substances that cause undesired odours from the incoherent plastics (polymeric granules).

One advantage is to permit a measurement of the residual quantity of odour and/or of the quantity of odour extracted from a deodorized polymeric resin.

One advantage is to control securely and reliably the process of deodorization of polymeric granules from recycled material.

One advantage is to provide a deodorization apparatus that is efficient in energy terms.

Such aims and advantages, and still others, are achieved by a method and/or an apparatus according to one or more of the claims set out below.

In one embodiment, a deodorization apparatus comprises a container of incoherent plastics, flow generation means to generate a process gas flow from a gas inlet to a gas outlet of the container, outlet olfactory sensor means arranged to detect odour emissions in the process gas exiting the container, control means configured to feedback control at least one indicative parameter of the humidity content of the entering process gas flow on the basis of signals supplied by the outlet olfactory sensor means.

In one embodiment, a deodorization method of incoherent plastics comprises generating a flow of a process gas through the incoherent plastics to extract odour emissions, detecting odour emissions in the process gas that has traversed the incoherent plastics, feedback controlling at least one parameter that is indicative of the humidity content of the entering process gas flow on the basis of the detected odour emissions.

### Brief description of the drawings

The invention can be better understood and implemented with reference to the attached drawings that illustrate one embodiment thereof by way of non-limiting example, in which:
- Figure 1 shows a vertical raised drawing of a first embodiment of a deodorization apparatus for incoherent plastics made in accordance with the present invention;
- Figure 2 shows a block diagram of one embodiment of an algorithm usable in a deodorization method made in accordance with the present invention, in particular implementable on the control means of the deodorization apparatus of Figure 1.

### Detailed description

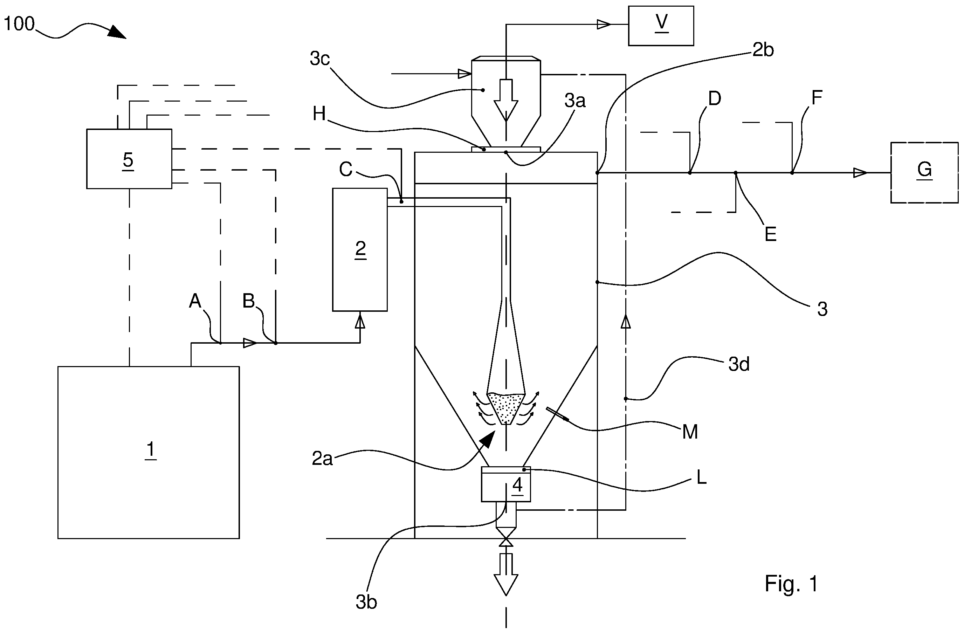

With reference to Figure 1, 100 indicates overall an apparatus for eliminating, reducing or correcting an odour, i.e. an odour emission, emanating from a substance, in particular from incoherent plastics, i.e. in the form of granules and/or microgranules and/or flakes or the like. The deodorization apparatus 100 may be used, in particular, in a plant for treating incoherent plastics, like for example a plant for dehumidifying and/or drying and/or crystalizing and/or conveying in a vacuum and/or under pressure incoherent plastics. The deodorization apparatus 100 may be arranged, for example, for feeding a user machine, like for example, an extruding apparatus that supplies extruded plastics to an injection and/or blow and/or compression moulding apparatus.

In addition, or in alternative to the extruding apparatus, the user machine may comprise, in particular, a packaging apparatus for packaging (bagging) the incoherent plastics.

The deodorization apparatus 100 may comprise, in particular, at least one container 2, 3 of incoherent plastics. The container 3 may comprise, for example, a hopper with vertical extent. The container 3 may comprise, in particular, at least one material inlet 3a for the entry of the incoherent plastics. The container 3 may comprise, in particular, at least one material outlet 3b for the exit of the incoherent plastics. The material inlet 3a may be arranged, as in the illustrated embodiment, in an upper portion of the container 3. The material outlet 3b may be arranged, as in the illustrated embodiment, in a lower portion of the container 3.

The container 3 may comprise, in particular, at least one gas inlet 2a for the entry of a process gas. The gas inlet 2a may be arranged near the lower portion of the container 3. In the illustrated embodiment in Figure 1, the gas inlet 2a is obtained on an end portion of a conduit inside the container 3. The container 3 may comprise, in particular, at least one gas outlet 2b for the exit of the process gas. The gas outlet 2b may be arranged, as in the illustrated embodiment, in an upper portion of the container 3.

The deodorization apparatus 100 may comprise, in particular, flow generation means 1, 2 configured to generate a process gas flow that enters the container 3 through the gas inlet 2a and exits the container 3 through the gas outlet 2b.

The deodorization apparatus 100 may use air as a process gas to extract the odour from the incoherent plastics. Alternatively to the air, the deodorization apparatus 100 may use a mixture of gas containing air and helium as a process gas. The mobility of the helium enables more efficient odour extraction than with just air. Alternatively, the deodorization apparatus 100 may use pure nitrogen (or air with a greater nitrogen component than in the atmospheric composition). In particular, the pure nitrogen, also owing to the great negativity as an absolute value of the dewpoint (values between -65°C and -72°C), enables the odour to be extracted better than with atmospheric composition air.

The flow generation means 1, 2 may comprise, in particular, at least one fan or blower (not shown) or other device that is able to generate an air flow (in the specific embodiment by extracting the air from the external environment) to confer a set flowrate on the process gas. Additionally, or alternatively, the flow generation means 1, 2 may comprise, in particular, one or more tanks suitable for containing a pressurized gas.

The gas outlet 2b may be in fluid communication with an external environment G directly or by the interposition of one or more purification filters for purifying the exiting process gas, for example active carbon filters. In one embodiment of the deodorization apparatus that is not illustrated, the gas outlet may be connected to a subsequent treatment apparatus to purify the exiting process gas before discharging the exiting process gas into the external environment. In a further embodiment that is not shown, the deodorization apparatus may be connected to a process gas recovery plant so as to make a closed operating path of the process gas.

The flow generation means 1, 2 may comprise, in particular, a dehumidifier device 1 configured, in particular, to dehumidify the process gas. The dehumidifier device 1 may be, in particular, of the adsorption type, comprising, in particular, drying elements or molecular sieves, a fan for moving the process gas to be dehumidified to the drying elements or through the molecular screens, and a heating element for heating the process gas to be used. The dehumidifier device 1 may comprise, in particular, one or more drying towers.

The dehumidifier device 1 may be, in particular, of the adsorption type, comprising, in particular, drying elements with an absorbing wheel made of silicon gel and/or molecular screens, a fan for moving the process gas to be dehumidified to the drying wheel, and a heating element for heating the process gas to be used.

The dehumidifier device 1 may be, in particular, of the type with compression technique, comprising, in particular, a compressor device for pressurizing the process gas (air in this case).

The dehumidifier device may be, in particular, of the refrigeration type or of the refrigerating-mechanical type, comprising, in particular, a heat exchanger, a condenser and an evaporator.

In the context of the invention, the phrases "upstream" and "downstream" refer to an operating path of the process gas in the deodorization apparatus 100. In the embodiment shown in Figure 1, the operating path of the process gas goes from the flow generation means 1, 2 in particular from the dehumidifier device 1, to the gas outlet 2b.

The deodorization apparatus 100 may comprise, in particular, humidity sensor means B, F for measuring an indicative value of the humidity content of the process gas. The indicative value of the humidity content of the process gas detectable by the humidity sensor means B, F may comprise, in particular, a dewpoint of the process gas and/or relative humidity of the process gas and/or absolute humidity of the process gas.

The humidity sensor means B, F may comprise, in particular, inlet humidity sensor means B to measure the indicative value of the humidity content of the process gas entering the container 3. The inlet humidity sensor means B may be arranged, in particular, downstream of the dehumidifier device 1 and upstream of the gas inlet 2a. In the illustrated embodiment, the inlet humidity sensor means B comprises a dewpoint sensor of the process gas.

The humidity sensor means B, F may comprise, in particular, exiting humidity sensor means F for measuring the indicative value of the humidity content of the process gas exiting the container 3. The exiting humidity sensor means F may be arranged, in particular, downstream of the container 3 and near the gas outlet 2b. In the illustrated embodiment, the exiting humidity sensor means F comprises a dewpoint sensor of the process gas.

The deodorization apparatus 100 may comprise, in particular, plastics humidity sensor means H, 4 for measuring an indicative value of the humidity content of the incoherent plastics. The indicative value of the humidity content of the incoherent plastics detectable by the plastics humidity sensor means H, 4 may comprise, in particular, a dewpoint and/or a relative humidity and/or an absolute humidity at the material inlet 3a and/or of the material outlet 3b.

The plastics humidity sensor means H, 4 may comprise, in particular, humidity sensor means for entering plastics H for measuring the indicative value of the humidity content at the material inlet in the container 3. The humidity sensors for entering plastics H may be arranged near, in particular, at the material inlet 3a to the container 3. In the illustrated embodiment, the humidity sensor means for entering plastics H comprises a dewpoint sensor at the material inlet 3a.

The plastics humidity sensor means H, 4 may comprise, in particular, humidity sensor means for exiting plastics 4 for measuring the indicative value of the humidity content at the material outlet from the container 3. The humidity sensors for exiting plastics 4 may be arranged near, in particular at, the material outlet 3b on the container 3. In the illustrated embodiment, the humidity sensor means for exiting plastics 4 comprises a dewpoint sensor at the material outlet 3b.

The plastics humidity sensor means H, 4 may comprise, in particular, humidity sensor means for inner plastics (not shown) for measuring the indicative value of the humidity content inside the container 3. The humidity sensors for inner plastics may be arranged in an inner zone comprised between the material inlet 3a and the material outlet 3b. The humidity sensor means for inner plastics may comprise, in particular, a dewpoint sensor at the inner zone.

In the context of the invention, the term "inner" is the interior of, i.e. the inside of, the container 3, the same applies to the derived terms.

The deodorization apparatus 100 may comprise, in particular, flowrate measuring means A for measuring the flowrate of the process gas. The flowrate measuring means A may be arranged, in particular, downstream of the fan or of the blower and upstream of the gas inlet 2a (Figure 1). In the illustrated embodiment, the flowrate measuring means A is arranged downstream of the dehumidifier device 1.

The flow generation means 1, 2 may comprise, in particular, a heater device 2 configured, in particular, to heat the process gas entering the container 3. The heater device 2 may be arranged, in particular, upstream of the gas inlet 2a. The heater device 2 may comprise, in particular, electric resistance means and/or a heat exchanger.

The deodorization apparatus 100 may comprise, in particular, temperature sensor means C, D, M for measuring the temperature of the process gas and/or of the incoherent material to be deodorized.

The temperature sensor means C, D, M may comprise, in particular, temperature sensor means at the inlet C for measuring the temperature of the process gas entering the container 3. The temperature sensor means at the inlet C may be arranged, in particular, downstream of the heater device 2, for example near the gas inlet 2a.

The temperature sensor means C, D, M may comprise, in particular, temperature sensor means at the outlet D for measuring the temperature of the process gas exiting the container 3. The temperature sensor means at the outlet D may be arranged, in particular, downstream of the container 3, for example near the gas outlet 2b.

The temperature sensor means C, D, M may comprise, in particular, temperature sensor means in material outlet M for measuring the temperature of the process gas near the exit of the incoherent material to be deodorized. The temperature sensor means in material outlet M may be arranged, in particular near the exit of the container 3. The temperature sensor means in material outlet M may be arranged, in particular, before the humidity sensor means for residual humidity 4, for example near the exit of the material 3b. In other words, in the specific embodiment in which the material outlet 3b is in a lower portion of the container 3, the temperature sensor means in the material outlet M is arranged at a greater height than the height of the humidity sensor means for exiting plastics 4.

The deodorization apparatus 100 may comprise, in particular, outlet olfactory sensor means E arranged to detect odour emissions (or odours) in the process gas exiting the container 3. The outlet olfactory sensor means E may be arranged, in particular, near the gas outlet 2b.

The deodorization apparatus 100 may comprise, in particular, control means 5 (in particular programmable electronic control means, for example an electronic processor or CPU or a microcontroller board) configured to control at least one operating parameter of the flow generating means 1, 2 on the basis of the signals supplied by the outlet olfactory sensor means E.

The control means 5 may be configured, in particular, to compare an odour emissions value detected by the outlet olfactory sensor means E with a desired threshold interval of odour emission values, i.e. an odour value or a series of odour values that it is desired the incoherent plastics to be processed should have. The desired threshold interval of odour emission values is comprised between an upper odour emission limit Lsup and a lower odour emission limit Linf.

The outlet olfactory sensor means E may comprise, in particular, an electronic nose configured to compare a detected odour with a set of predetermined and stored odours. In particular, the outlet olfactory sensor means E may comprise a set of sensors selected for detecting predefined molecules for example volatile organic compounds (VOC), hydrocarbons, alcohols, etc. In particular, the outlet olfactory sensor means E may comprise a set of sensors selected for detecting, in particular, aromatic hydrocarbons and/or unsaturated hydrocarbons and/or saturated hydrocarbons and/or nitrogenous esters and/or oxygenated compounds and/or sulphur compounds, etc.

In particular, the outlet olfactory sensor means E may comprise a set of sensors selected for detecting, in particular, at least one, or at least two, or at least three, or at least four groups of substances selected from a set consisting of the following groups: aromatic hydrocarbons, unsaturated hydrocarbons, saturated hydrocarbons, nitrogenous esters, oxygenated compounds, sulphur compounds, etc.

The operating parameter of the flow generation means 1, 2 may comprise, in particular, an indicative value of the humidity contained in the entering process gas flow. The operating parameter of the flow generation means 1, 2 may comprise, in particular, a dewpoint value (or dewpoint, expressed in °C) of the process gas flow.

The operating parameter of the flow generation means 1, 2 may comprise, in particular, a relative humidity value of the process gas flow and/or an absolute humidity value of the process gas flow and/or a specific humidity value of the process gas flow.

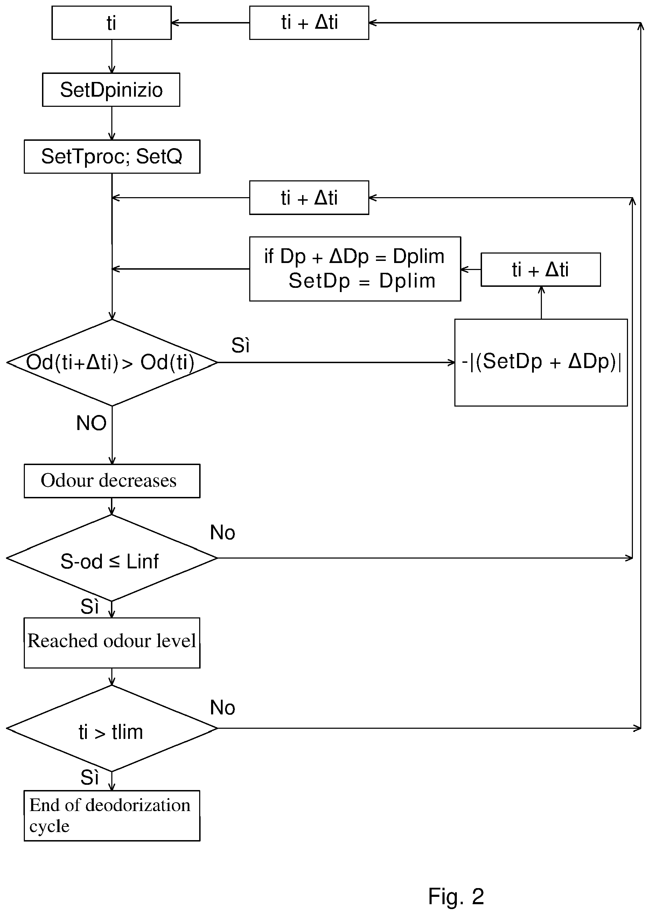

The control means 5 may be configured, in particular, to increase the dehumidifying capacity of the process gas flow if the odour emissions value increases. In other words, the control means 5 may be configured to decrease the humidity content of the process gas flow if the odour emissions value detected in a first instant ti is less than an odour emissions value detected in a second instant ti + Δt following the first instant ti (Figure 2). During operation, when the outlet olfactory sensor means E detects that in a preset time interval Δt the odour emissions of the process gas exiting the container 3 have increased, the control means 5 controls the flow generation means 1, 2 so as to accentuate dehumidification of the process gas.

The control means 5 may be configured, in particular, to maintain the dehumidifying capacity of the process gas flow constant if the detected odour emissions value does not increase. In other words, the control means 5 may be configured to maintain the humidity content of the process gas flow if the odour emissions value detected in a first instant ti is greater than or the same as an odour emissions value detected in a second instant ti + Δt following the first instant ti (Figure 2). During operation, when the outlet olfactory sensor means E detects that in a preset time interval Δt the odour emissions of the process gas exiting the container 3 have decreased, the control means 5 controls the flow generation means 1, 2, so as to leave the dehumidification of the process gas unvaried.

The indicative value of the humidity content of the maintained process gas flow is kept constant until the odour emissions value reaches a preset odour emissions threshold value (in this case a lower odour emissions limit Linf, Figure 2). The indicative value of the humidity content of the maintained process gas flow is matched by an effective extraction of the odour emissions for given incoherent plastics. In fact, with reference to the dewpoint value of the process gas flow, relatively lower values (high negative absolute values) are matched by greater expenditure, in particular in terms of energy expended. The control logic implemented by the control means 5 enables a desired and relatively economical desired value to be reached to perform effective deodorization, in particular to reach the preset odour emissions threshold value.

It has been found that using suitably dehumidified air, i.e. an air provided with a residual humidity value defined by a dewpoint (dewpoint expressed in °C) or defined in terms of mass and/or volume by the ratio between residual water (expressed in g) and treated air (expressed in m³ or kg), generates a pressure difference linked to a different vapour tension present between the centre and/or the heart of the plastics granule and the surface of the granule immersed in the process fluid. This pressure difference, generated by the residual vapour tension of the process fluid, enables the speed of permeation of the odour from the centre of the plastics granule (i.e. from the mass thereof) to the external surface thereof to be modified.

The control means 5 may be configured, in particular, to store in storage means the indicative value of the humidity content of the maintained process gas flow and associate this value with the type of incoherent plastics processed. The indicative value of the humidity content of the maintained process gas flow may be set each time that the associated incoherent plastics are used. The storage means may comprise, in particular, an electronic memory or a data bank.

The control means 5 may be configured, in particular, to limit the humidity content of the process gas flow to a preset dewpoint limit value Dplim, so as to avoid excessive dehumidification of the process gas (and the excessive dehumidification of the incoherent plastics).

The control means 5 may be configured, in particular, to compare a plastics humidity value measured by the plastics humidity sensor means H, 4 with a plastics humidity threshold value, i.e. a humidity value or a series of humidity values that it is desired the incoherent plastics to be treated should have.

The control means 5 may be configured, in particular, to control the flow generation means 1, 2 and to receive humidity signals supplied by said plastics humidity sensor means H, 4. The control means 5 may be configured, in particular, to control the at least one operating parameter of the flow generating means 1, 2 on the basis of the humidity signals supplied by the plastics humidity sensor means H, 4, when the outlet olfactory sensor means E detects odour emissions that are lower than or the same as the lower odour emissions limit Linf.

The desired material humidity threshold value at the outlet may be selected, in particular, if the incoherent plastics to be deodorized have to be processed by an extruding apparatus, so that the desired humidity value of material at the outlet is used as a work parameter for the extruding apparatus.

The desired material humidity threshold value at the outlet may be not selected if the incoherent plastics to be deodorized have to be processed by a packaging apparatus for packaging (bagging) the incoherent plastics once they have been deodorized. In other words, it can be advantageous to perform (by the control means 5) a check on the quantity of residual humidity in the incoherent plastics following the deodorization, in particular, if the incoherent plastics exiting the container 3 (or exiting the deodorization apparatus 100) have to be processed immediately afterwards by an extruding apparatus.

The control means 5 may be configured, in particular, to increase the dehumidifying capacity of the entering process gas if the indicative humidity value of entering plastics is greater than a humidity threshold value of entering material.

Additionally, or alternatively, the control means 5 may be configured, in particular, to increase the dehumidifying capacity of the entering process gas if the indicative humidity value of exiting plastics is greater than a desired material humidity threshold value at the outlet.

The deodorization apparatus 100 may comprise, in particular, recirculating means 3d for recirculating incoherent plastics configured, in particular, to enable a part of incoherent plastics to be recirculated from the material outlet 3b to the material inlet 3a.

The recirculating means 3d for recirculating incoherent plastics may comprise, in particular, a conduit configured to place the material inlet 3a in contact with the material outlet 3b and a lifting device (not shown) to lift part of the incoherent plastics from the height of the material outlet 3b to the height of the material inlet 3a.

On the upper portion of the container 3 in particular, an inlet chamber 3c may be configured, in particular, to receive the incoherent plastics entering the deodorization apparatus 100 (shown by an arrow entering the inlet chamber 3c in the diagram of Figure 1). The inlet chamber 3c may be connected to vacuum V generating means, like for example a suction device.

The deodorization apparatus 100 may implement a deodorization method for eliminating, reducing or correcting the odour of incoherent plastics. The deodorization method may comprise, in particular, a step of arranging plastics in a container, like the container 3.

The deodorization method may comprise, in particular, a step of generating a process gas flow through the incoherent plastics to extract odour emissions. The step of generating the process gas flow may comprise, in particular, a step of dehumidifying the process gas. In addition to the step of dehumidifying, the step of generating the process gas flow may comprise, in particular, a step of heating the process gas.

The deodorization method may comprise, in particular, a step of detecting odour emissions in the process gas that has traversed the incoherent plastics.

The deodorization method may comprise, in particular, a step of feedback controlling at least one operating parameter of the process gas flow on the basis of the detected odour emissions. The operating parameter of the process gas flow may comprise, in particular, an indicative value of the humidity content of the entering process gas flow. The indicative value of the humidity content of the entering process gas flow may comprise, in particular, a dewpoint of the process gas flow and/or a relative humidity value of the process gas flow and/or absolute humidity value of the process gas flow and/or a specific humidity value of the process gas flow.

The controlling step may comprise, in particular, increasing the dehumidifying capacity of the process gas flow if the odour emissions value increases. In other words, the controlling step may comprise, in particular, decreasing the humidity content of the process gas flow if the odour emissions value detected in a first instant ti is less than an odour emission value detected in a second instant ti + Δti following the first instant ti (Figure 2).

The controlling step may comprise, in particular, keeping the dehumidifying capacity of the process gas flow constant if the detected odour emissions value does not increase. In other words, the controlling step may comprise, in particular, maintaining the humidity content of the process gas flow if the odour emissions value detected in a first instant ti is greater than or the same as an odour emissions value detected in a second instant ti + Δti following the first instant ti (Figure 2).

The deodorization method may comprise, in particular, a step of comparing a detected odour emission value with a lower odour emissions limit Linf.

The deodorization method may comprise, in particular, a step of measuring an indicative humidity value of incoherent plastics. The step of measuring an indicative humidity value of incoherent plastics may comprise, in particular, measuring an indicative humidity value of the incoherent entering plastics.

Additionally, or alternatively, the step of measuring an indicative humidity value of incoherent plastics may comprise, in particular, measuring an indicative humidity value of the incoherent exiting plastics. Additionally, or alternatively, the step of measuring an indicative humidity value of incoherent plastics may comprise, in particular, measuring an indicative humidity value of said incoherent inner plastics. In other words, the indicative humidity value of incoherent plastics may be measured at the inlet to and/or at the outlet from and/or inside the container 3.

If the detected odour emissions value is less than or the same as the lower odour emissions limit Linf, the comparing step may be followed by a step of controlling the at least one operating parameter of the process gas flow on the basis of the humidity value of incoherent plastics. The controlling step of controlling the at least one operating parameter of the process gas flow on the basis of the humidity value of incoherent plastics may be present if the deodorized incoherent plastics are intended for an extruding apparatus. Alternatively, the controlling step of the at least one operating parameter of the process gas flow on the basis of the humidity value of incoherent plastics may be present if the deodorized incoherent plastics is intended for a packaging apparatus for packaging (bagging) the deodorized incoherent plastics.

The controlling step of controlling the at least one operating parameter of the process gas flow on the basis of the humidity value of incoherent plastics may comprise, in particular, increasing the dehumidifying capacity of the entering process gas if the indicative humidity value of entering plastics is greater than a humidity threshold value of entering material.

Additionally, or alternatively, the controlling step of controlling the at least one operating parameter of the process gas flow on the basis of the humidity value of incoherent plastics may comprise, in particular, increasing the dehumidifying capacity of the entering process gas if the indicative humidity value of exiting plastics is greater than a desired material humidity threshold value at the outlet.

Additionally, or alternatively, the controlling step of controlling the at least one operating parameter of the process gas flow on the basis of the humidity value of incoherent plastics may comprise, in particular, increasing the dehumidifying capacity of the entering process gas if the indicative humidity value for inner plastics is greater than an inner material humidity threshold value.

With reference to Figure 2, a non-limiting embodiment is illustrated of a control logic of the deodorization method and of the control means 5.

In an initial step the desired threshold interval of odour emission values is set, in particular a lower odour emissions limit Linf. In a time instant i-th ti, in particular, the at least one operating parameter of the process gas flow is set. In this embodiment, a desired initial dewpoint value of the process gas SetDpinizio is set, a desired temperature of the process gas SetTproc is set and a desired flowrate of the process gas SetQ. In the instant i-th t the desired initial dewpoint value of the process gas SetDpinizio corresponds to a desired initial dewpoint value of the process gas SetDp.

Once the at least one operating parameter is set, the control means 5 controls the flow generation means 1, 2 to generate a process gas flow having the desired dewpoint value SetDp, the desired temperature of the process gas SetTproc and the desired flowrate of the process gas SetQ. The desired threshold interval of odour values and/or the at least one operating parameter of the process gas flow may be set by an operator by a user terminal device (not shown) and/or automatically on the basis of information relating to the incoherent plastics to be treated, such as the type of material, type of granule, etc. This information may be stored in an electronic memory and/or in a remote data bank. In the instant ti the outlet olfactory sensor means E detects an odour emission value Od(ti).

Subsequently, in an instant ti+Δti, where Δti is a preset time interval, the outlet olfactory sensor means E detects an odour emission value Od(ti+Δti).

If the control means 5 detects the condition Od(ti+Δti) > Od(ti) the desired dewpoint value SetDp is decreased (increasing the absolute value if, as normally occurs, the dewpoint value expressed in °C is negative) by a delta dewpoint of the process gas, i.e. the dehumidification capacity of the flow of the process gas is increased. In this situation, the odour emissions have increased between the instant ti and ti+Δti. In this situation, the control means 5 checks that the condition of reaching the limit dewpoint Dplim of the process gas has been reached, in this case the desired dewpoint SetDp corresponds to the limit dewpoint Dplim.

If, in an instant ti+Δti, the control means 5 detects the condition Od(ti+Δti) < Od(ti) the desired dewpoint value SetDp is maintained constant, i.e. the dehumidification capacity of the flow of the process gas is left unaltered. In this situation the odour emissions have decreased between the instant ti and ti+Δti.

When the control means 5 detects that an odour value read by the outlet olfactory sensor means S-Od is less than or the same as the lower odour emissions limit Linf, the desired odour value has been reached. If the control means 5 detects that the odour value read by the outlet olfactory sensor means S-Od is greater than the lower odour emission limit Linf, the desired odour value has not been reached.

### Legend:

- 100: Deodorization apparatus for incoherent plastics
- 1: Dehumidifier device for dehumidifying process gas
- 2: Heating device for heating the process gas
- 2a: Process gas inlet
- 2b: Process gas outlet
- 3: Container of the incoherent plastics
- 3a: Material inlet
- 3b: Material outlet
- 3c: Inlet chamber of the incoherent plastics
- 3d: Recirculating means for the incoherent plastics
- 4: Humidity sensor means di exiting plastics
- 5: Control means
- A: Measuring means for measuring the flowrate of the process gas
- B: Inlet humidity sensor means for the process gas
- C: Temperature sensor means at inlet of the process gas
- D: Temperature sensor means at exit of the process gas
- E: Outlet olfactory sensor means for the process gas
- F: Humidity sensor means at exit of the process gas
- G: External environment
- H: Humidity sensor means for entering plastics
- M: Temperature sensor means at exit of the incoherent plastics
- V: Vacuum generating means

- i: Number of the interaction cycle of the algorithm
- SetDpinizio: Desired initial dewpoint of the process gas
- SetDp: Desired dewpoint of the process gas
- Dplim: Limit dewpoint of the process gas
- ΔDp: Delta dewpoint of the process gas
- Od(ti): Odour value at the instant ti
- Od(ti+Δti): Odour value at the instant ti + Δti
- tlim: Maximum deodorization time
- SetTproc: Desired temperature of the process gas
- SetQ: Desired flowrate of the process gas
- S-od: Odour value read by the outlet olfactory sensor means
- Linf: Lower limit of the odour value

## Claims

1. Deodorization apparatus (100), to eliminate, reduce or correct the odour of incoherent plastics, said apparatus comprising:
- at least one container (3) with at least one material inlet (3a) for the entry of incoherent plastics, at least one material outlet (3b) for the exit of the incoherent plastics, at least one gas inlet (2a) for the entry of a process gas, at least one gas outlet (2b) for the exit of the process gas;
- flow generation means (1, 2) configured to generate a process gas flow which enters said gas inlet (2a) and exits from said gas outlet (2b);
**characterized by** comprising:
- outlet olfactory sensor means (E) arranged to detect odour emissions in the process gas exiting said container (3);
- control means (5) configured to control said flow generation means (1, 2) and to receive signals provided by said outlet olfactory sensor means (E), said control means (5) being configured to control a parameter indicative of the humidity content of the process gas flow entering said container (3) based on said signals.

2. Deodorization apparatus (100) according to claim 1, wherein said flow generation means (1, 2) comprises a dehumidifier device (1) configured to dehumidify the process gas and a heater device (2) configured to heat the process gas.

3. Deodorization apparatus (100) according to claim 1 or 2, wherein said parameter indicative of the humidity content of the entering process gas flow comprises the dewpoint of the entering process gas and/or the relative humidity of the entering process gas and/or the absolute humidity of the entering process gas and/or the specific humidity of the entering process gas.

4. Deodorization apparatus (100) according to any one of the preceding claims, wherein said control means (5) is configured to increase the dehumidifying capacity of the entering process gas if the odour emissions detected by said outlet olfactory sensor means (E) increase.

5. Deodorization apparatus (100) according to any one of the preceding claims, wherein said control means (5) is configured to maintain constant the dehumidifying capacity of the entering process gas if the odour emissions detected by said outlet olfactory sensor means (E) do not increase.

6. Deodorization apparatus (100) according to any one of the preceding claims, and comprising plastics humidity sensor means (H, 4) to measure at least one humidity value of plastics entering and/or exiting and/or inside said container (3); and wherein said control means (5) is configured to control said flow generation means (1, 2) and to receive humidity signals provided by said plastics humidity sensor means (H, 4), said control means (5) being configured to control said parameter indicative of the humidity content of the process gas flow entering said container (3) based on said humidity signals when said outlet olfactory sensor means (E) detects odour emissions which are less than or equal to an odour emissions lower limit (Linf).

7. Deodorization apparatus (100) according to claim 6, wherein said control means (5) is configured to increase the dehumidifying capacity of the entering process gas if said humidity value of entering plastics is more than a threshold humidity value of entering plastics and/or to increase the dehumidifying capacity of the entering process gas if said humidity value of exiting plastics is more than a desired threshold humidity value of exiting plastics.

8. Deodorization method to eliminate, reduce or correct the odour of incoherent plastics, said method comprising the steps of:
- generating a process gas flow through incoherent plastics;
- detecting odour emissions in the process gas which has passed through said incoherent plastics;
- controlling at least one parameter of the process gas flow which has to pass through the incoherent plastics based on said odour emissions which are detected, said parameter being indicative of the process gas humidity content.

9. Deodorization method according to claim 8, wherein said generating a process gas flow comprises dehumidifying and heating the process gas.

10. Deodorization method according to claim 8 or 9, wherein said at least one parameter of the process gas flow comprises the dewpoint of the process gas and/or the relative humidity of the process gas and/or the absolute humidity of the process gas and/or the specific humidity of the process gas.

11. Deodorization method according to any one of claims 8 to 10, wherein said controlling comprises increasing the dehumidifying capacity of the process gas flow, in particular by decreasing the dewpoint of the process gas, if a detected value of the odour emissions increases.

12. Deodorization method according to any one of claims 8 to 11, wherein said controlling comprises maintaining constant the dehumidifying capacity of the process gas flow, in particular by maintaining constant the dewpoint of the process gas, if a detected value of the odour emissions does not increase.

13. Deodorization method according to any one of claims 8 to 12, and comprising measuring at least one plastics humidity value, and controlling at least one parameter of the process gas flow based on said plastics humidity value which is detected if said odour emissions are less than or equal to an odour emissions lower limit (Linf).

14. Deodorization method according to claim 13, wherein said measuring at least one plastics humidity value comprises measuring a humidity content indicative value of entering plastics and/or measuring an humidity content indicative value of exiting plastics and/or measuring an humidity content indicative value of inside plastics, and wherein said controlling comprises increasing the dehumidifying capacity of the entering process gas if said humidity content indicative value of entering plastics is greater than a threshold humidity value of entering plastics and/or increasing the dehumidifying capacity of the entering process gas if said humidity content indicative value of exiting plastics is greater than a humidity threshold desired value of exiting plastics and/or increasing the dehumidifying capacity of the entering process gas if said humidity content indicative value of inside plastics is greater than a humidity threshold value of inside plastics.
